# EUROPEAN PATENT APPLICATION

(11) **EP 3 139 565 A1**
(43) Date of publication of application: **08.03.2017**
(21) Application number: 15306354.0
(22) Date of filing: 03.09.2015
(51) Int. Cl.: H04L 29/06, H04W 40/00

(54) **PARSER FOR LOCALLY ROUTING VOICE OVER SMALL CELLS OF A LONG TERM EVOLUTION NETWORK**

(71) Applicant: ALCATEL LUCENT, 92100 Boulogne-Billancourt (FR)
(72) Inventor: JEYARAJ, Samuel, 560045 Bangalore (IN); KADIRVELU, Kannan, 560045 Bangalore (IN)
(74) Representative: Berthier, Karine

(57) **Abstract**

Parser (PAR) for locally routing voice over at least one small cell of a long term evolution network, comprising means for, when a user equipment (UE1) triggers a Session Initiation Protocol (SIP) registration procedure:
- receiving (110) a SIP message 200 OK from a proxy call session control function (P-CSCF),
- checking (111) whether the received SIP message 200 OK is a response to a SIP message Register, and if the checking is positive,
- checking (111) whether the Expire field in the Contact header in the SIP message 200 OK is non zero, and if the checking is positive,
- creating (111) mapping information mapping a registered SIP universal resource identifier assigned to the user of the user equipment UE and an IP address assigned to the user equipment UE,
- and synchronizing a tunnel end point during each user equipment SIP registration.

## Description

### BACKGROUND OF THE INVENTION

### Field of the invention

The present invention generally relates to telephone communication in a mobile telecommunication network of the type called Long Term Evolution (LTE) and comprising small cells.

In a LTE network, the telephone calls are currently called VoLTE calls. The LTE access network is simply a network of base stations, called evolved Nodes B (eNB), generating a flat architecture. There is no centralized intelligent controller, and the eNB are normally inter-connected via X2 interfaces; and are connected towards a core network via S1 interfaces. The reason for distributing the intelligence amongst the base-stations, in LTE architecture, is to speed up the connection set-up and reduce the time required for a handover.

The invention concerns LTE small cells. Small cells are used to provide in-building and outdoor wireless service. Mobile operators use small cells to extend their service coverage and/or increase network capacity. With small cells, mobile operators can offload traffic as much as 80% during peak times. Due to their low cost and easy deployment, small cells are also a viable and cost-effective alternative to traditional macro networks in remote rural areas with little or no terrestrial network infrastructure. Likewise in enterprise solutions and metro hotspots, operators can deploy small cells to improve local coverage, increase capacity and offload macro network traffic.

All the small cells are based on the Femtocell technology. Each small cell has an eNB called home evolved node B (HeNB). A HeNB performs the same function of an eNB, but with smaller coverage than macro eNB, for instance in indoor premises, enterprise scenarios and public hotspots. Several neighboring small cells can constitute a "group of small cells". Their respective eNBs have local interconnectivity and are configured to respectively provide coverage for particular zones (e.g. three eNBs are used to provide connectivity for one particular office).

### Description of the prior art

The VoLTE calls are presently not locally routed. They are routed by the core of a LTE network, even when the calls are to be made between two user equipments (UE) that are located within a same small cell (in a home or enterprise) or a same group of small cells. Call establishment is made via an Internet Protocol Multimedia Subsystem (IMS), or an Internet protocol Multimedia Core Network Subsystem (IMCNS), that is an architectural framework for delivering multimedia services, as per 3GPP standards for ProSe solutions (The ProSe (Proximity Services) solutions provides a means of communication between two UEs in proximity, by means of an Evolved Universal Terrestrial Radio Access Network (E-UTRAN) communication path established between the UEs. The communication path could, for example, be established directly between the UEs or routed via local eNB(s), however this requires UE to be enabled with ProSe support).

No additional support functionality is implemented in the UE.

However a local routing for the VoLTE calls would be more efficient and cost effective. Thus, there is a need to provide a better technical solution for providing proximity voice services over LTE, for enterprise and home users. The aim of the present invention is to provide proximity voice services for users connected to a same HeNB, or to different HeNB serving small cells belonging to a same group of small cells, without the calls going outside the HeNB of a the small cell, or a plurality of HeNBs serving a group of small cells.

This can be solved by applying, the parser according to the invention.

### SUMMARY OF THE INVENTION

The object of the invention is a parser for locally routing voice over at least one small cell of a long term evolution network, characterized in that it comprises means for, when a user equipment triggers a Session Initiation Protocol (SIP) registration procedure:
- receiving a SIP message 200 OK from a proxy call session control function,
- checking whether the received SIP message 200 OK is a response to a SIP message Register, and if the checking is positive,
- checking whether the Expire field in the Contact header in the SIP message 200 OK is non zero, and if the checking is positive,
- creating mapping information mapping a registered SIP universal resource identifier assigned to the user of the user equipment UE and an IP address assigned to the user equipment UE,
- and synchronizing a tunnel end point during each user equipment SIP registration.

Thanks to the means for creating mapping information mapping a registered SIP universal resource identifier assigned to the user of the user equipment UE and an IP address assigned to the user equipment UE for VoIP communication, the user equipment can have a local call established without crossing the core network as traditionally done by the 3GPP standards for VoLTE solution (the packets were routed all the way via backbone network even between two UEs connected to the same HeNB or HeNB belonging to the same group). The parser according to the invention will enable to provide Intercom like solutions over LTE. The routing for VoLTE calls will remain local. There is no necessity of reaching the core network. This solution does not require any additional functionality/application support to be implemented in the UE.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1 shows a signaling flow for the connection establishment and session Initiation Protocol (SIP) registration procedure of user equipment in an exemplary LTE network comprising a parser according to the invention.
- Figure 2 shows a signaling flow for the re/de-registration of user equipment in the same exemplary LTE network.
- Figure 3 shows a signaling flow for a successful VoLTE call setup, for the case where the two users are connected to a same home eNB.
- Figure 4 shows a signaling flow for a VoLTE call release, for the case where the two users are connected to a same home eNB.

### DETAILED DESCRIPTION OF THE PREFERRED EMBODIMENTS

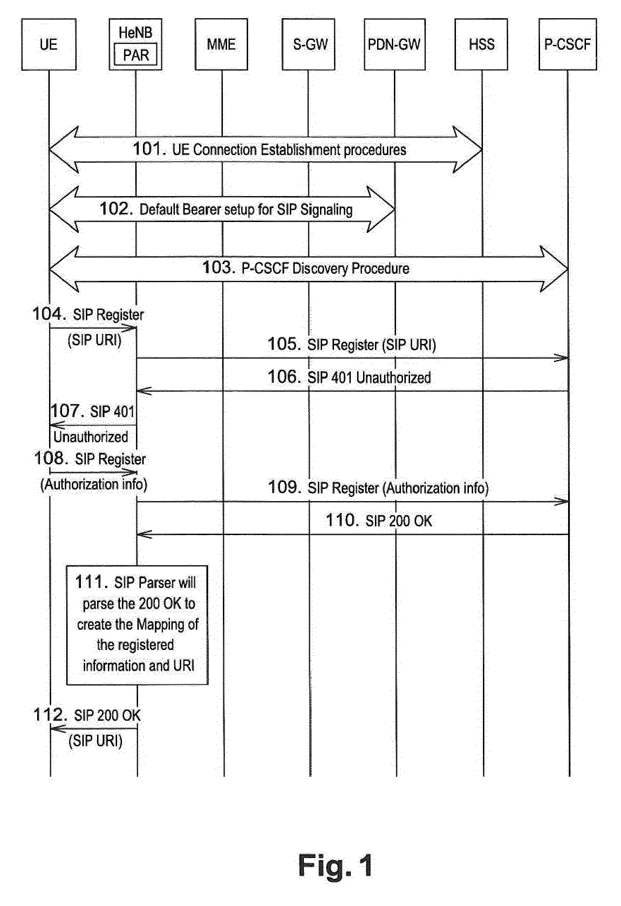

**Figure 1** shows a signaling flow for the connection establishment and SIP registration procedure of user equipment UE in an exemplary LTE network. This exemplary LTE network also comprises:
- A home evolved node B, HeNB, comprising a SIP parser PAR, according to the invention. The user equipment UE is connected to this evolved node B, HeNB.
- A mobility management entity MME.
- A serving gateway S-GW.
- A public data network gateway PDN-GW.
- A home subscriber server HSS.
- A proxy call session control function P-CSCF.

This embodiment of the method according to the invention comprises the following steps for the connection establishment and SIP registration procedure of the user equipment UE:
**STEP 101:** The connection establishment procedure is classically executed between the user equipment UE and the home subscriber server HSS, according to the 3GPP standards: It includes a random access procedure, a radio resource control connection setup, and an authentication.
**STEP 102:** The procedure of default bearer establishment for SIP signalling is classically executed between the user equipment UE and the public data network gateway PDN-GW, as per 3GPP standards, which include radio resource control connection reconfiguration, and bearer modification
**STEP 103:** The user equipment UE and the proxy call session control function P-CSCF perform a proxy call session control function discovery procedure. The address of the proxy call session control function P-CSCF address is classically discovered by using information stored in the Internet protocol multimedia services identity module of the user equipment UE, during a classical packet data network connectivity request, by the dynamic host control protocol procedure; and by using a domain name server (not represented on the figure), as defined in 3GPP standards.
**STEP 104:** The user equipment UE initiates SIP registration in a SIP Server (not represented on the figure) embedded in the proxy call session control function P-CSCF, by sending, to the PARSER PAR, a SIP Register message containing a SIP universal resource identifier. The user equipment UE can perform initial registration upon SIP application start-up, or periodic re-registration.
**STEP 105:** The SIP parser PAR does nothing and just forwards the SIP Register message to the SIP server embedded in the proxy call session control function P-CSCF.
**STEP 106:** Once the SIP server embedded in the proxy call session control function P-CSCF receives the SIP REGISTER message, it sends an authentication challenge, in a SIP message 401 Unauthorized, to the SIP parser PAR.
**STEP 107:** The SIP parser PAR does nothing and just forwards the SIP message 401 Unauthorized message to the user equipment UE.
**STEP 108:** The user equipment UE then sends, to the parser PAR, a SIP REGISTER message carrying authentication credentials that are a response to the authentication challenge originating from the SIP server embedded in the proxy call session control function P-CSCF.
**STEP 109:** the SIP parser PAR does nothing and just forwards the message SIP REGISTER to the SIP server embedded in the proxy call session control function P-CSCF.
**STEP 110:** The SIP server, embedded in the proxy call session control function P-CSCF, sends a SIP message 200 OK to the user equipment UE, for indicating that the registration has been successful.
**STEP 111:** The SIP parser PAR creates a user's context corresponding to the user equipment UE. In particular, it parses the SIP message 200 OK that is a response to the REGISTER message. It extracts the CONTACT header in the SIP message 200 OK for checking whether an EXPIRE field is present in the 200 OK message; and if this EXPIRE field is non zero (at initial registration the value is non zero), the SIP parser PAR creates mapping information, mapping a registered SIP universal resource identifier assigned to the user of the user equipment UE and an Internet protocol (IP) address assigned to the user equipment UE. Furthermore, in order to support synchronization across multiple HeNBs present in the same group, the mapping information along with tunnel end point is synchronized during each user equipment SIP registration (broadcast/multicast mechanism) inside the small cell group.
   If the EXPIRE field is zero, the SIP parser PAR does not create a user's context corresponding to the user equipment UE.
**STEP 112:** The SIP parser forwards SIP 200 OK to the user equipment UE.

Note: This mapping information shall be cleared when the context of the user equipment UE1 is removed from the HeNB due to deregistration/re-registration/Idle Mode/Handover, or any other scenario which will lead to deletion of user's context, as defined in 3GPP standards.

If the user equipment is moving within a group of small cells, this mapping information should be transferred, during a time of mobility, from a HeNB to another HeNB which would enable the local routing.

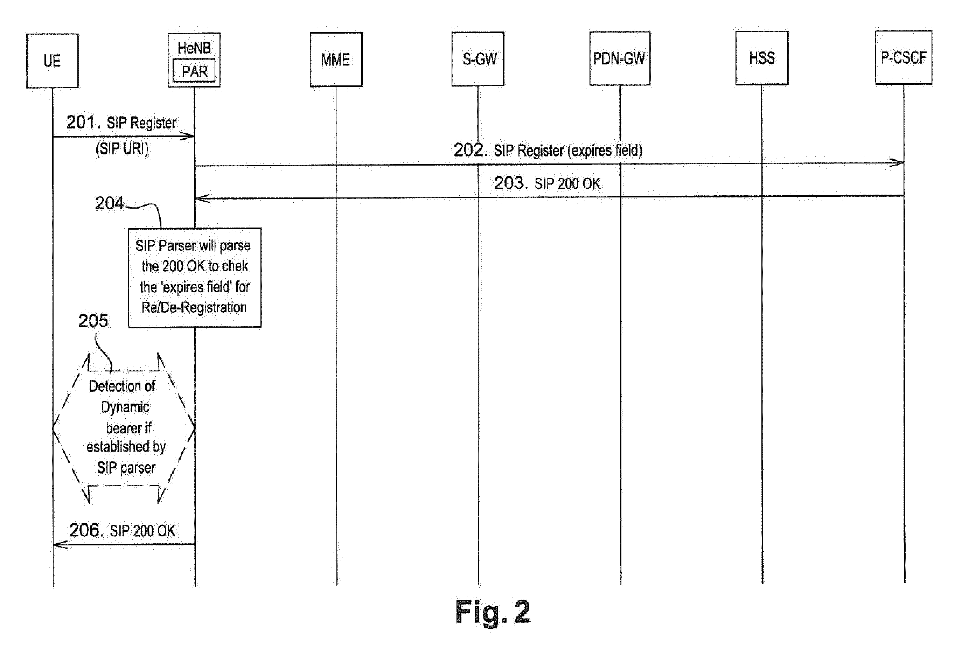

**Figure 2** shows a signaling flow for the re/de-registration of the user equipment UE in the same exemplary LTE network.

**STEP 201:** The user equipment UE sends a SIP REGISTER message to the parser PAR. In this message, the EXPIRES header is set to zero in case of de-registration, or is set to any value in case of re-registration. This message is destinated to the same SIP Server embedded in the proxy call session control function P-CSCF with whom the user equipment UE initially registered.

**STEP 202:** The SIP parser PAR does nothing and just forwards the SIP message REGISTER to the destination (The SIP server embedded in the proxy call session control function P-CSCF).

**STEP 203:** The SIP server embedded in the proxy call session control function P-CSCF sends an acknowledgement SIP 200 OK message to the user equipment UE indicating that de/re-registration was successful. The SIP context for the user equipment UE is deleted if the EXPIRES field, in this message SIP 200 OK, is set to zero; else its content life is extended to the time value sent in Expires field.

**STEP 204:** The SIP parser PAR parses the SIP message 200 OK. As this SIP message 200 OK is a response to a SIP REGISTER message, the SIP parser PAR checks whether the "CONTACT" header contains an EXPIRE field. If this field is non zero (at re-registration, the value will be non zero), it just forwards the message to the user equipment UE.
If this field is set to zero, the parser PAR cross verifies whether there is any dynamic bearer established by the SIP parser PAR, and if there is a dynamic bearer established it triggers the deletion of this bearer.

**STEP 205:** If the user equipment UE is still present and active, the SIP parser PAR deletes the flow. It also deletes the mapping information it created for the user equipment UE during SIP registration. The SIP parser PAR will trigger synchronization update across multiple HeNB present in the same group for deletion of SIP mapping information along with tunnel end point mapping (STEP 111 on Figure 1).

**STEP 206:** The SIP parser PAR forwards the SIP message 200 OK to the user equipment UE.

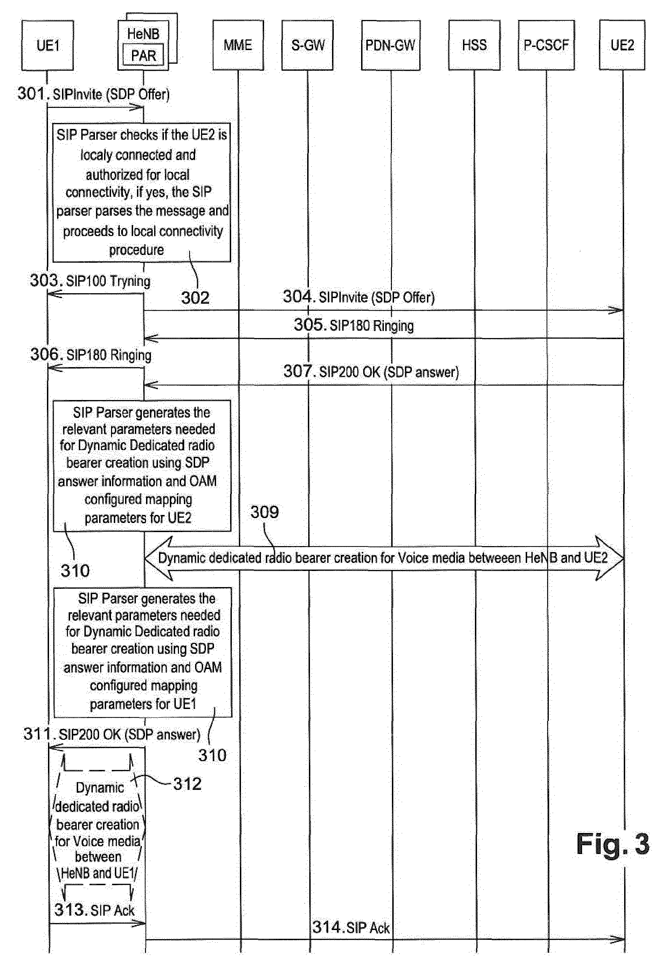

**Figure 3** shows a signaling flow, in the same exemplary network, during a successful VoLTE call setup, for the case where two users UE1 and UE2 are connected to a same home evolved node B, HeNB.

**STEP 301:** The calling user equipment UE1 sends a SIP INVITE request message, containing an initial session description Protocol (SDP) offer, to the home evolved node B (HeNB), in order to initiate a call with the called user equipment UE2, in the classical way, i. e. this message is destined to the proxy call session control function P-CSCF.

**STEP 302:** In the home evolved node B (HeNB), the SIP Parser PAR parses the SIP INVITE message and then checks whether the called user equipment UE2 is locally connected (i. e. connected to the same home evolved node B, HeNB, as the calling user equipment UE1), and whether the user equipment UE2 is authorized for local connectivity:
-- If the context of the called party UE2 is present in the mapping information created during the SIP Registration, or context update due to mobility of user equipment UE2, within the SIP Parser PAR, then the parser PAR parses the SIP INVITE message and routes the call locally with the modification of the IP address to the UE2.
-- If the context of the called party UE2 is not present in the mapping information then the parser PAR forwards the SIP INVITE message to the proxy call session control function P-CSCF. A voice call setup will be done according to the procedures explained in 3GPP Specifications.

**STEP 303:** In this example, the context of the called party UE2 is present in the mapping information, so the parser PAR responds to the calling user equipment UE1 with a SIP message 100 Trying, which is generated locally.

**STEP 304:** The SIP Parser PAR then forwards the SIP INVITE message to the called user equipment UE2.

**STEP 305:** On Receiving the SIP INVITE message, the called user equipment UE2 responds with a SIP message 180 Ringing to the SIP parser PAR, this message being destined to calling user equipment UE1.

**STEP 306:** Then the SIP parser PAR just forwards the SIP message 180 Ringing to its destination, the calling user equipment UE1.

**STEP 307:** The called user equipment UE2 accepts the call. It responds to the SIP Invite request by sending, to the SIP parser PAR, a SIP message 200 OK, with the relevant media information.

**STEP 308:** The SIP parser PAR generates the parameters needed for creating a dynamic dedicated radio bearer between itself and the called user equipment UE2. It parses the received SIP message 200 OK in order to obtain media flow information: It uses information from the session description protocol answer field of the SIP message 200 OK received from the called user equipment UE2, and from operation and administration management information supplied by the network and that is relevant for the called user equipment UE2.

Note: In case of the call is cancelled, then the SIP message 200 OK will not have the SDP answer field; and then the SIP parser PAR will not trigger the dynamic radio bearer procedure towards the user equipments UE2 and UE1.

**STEP 309:** Then the home evolved node B (HeNB), triggers the classical dynamic radio bearer procedure for a new voice flow between itself and the user equipment UE2, by using the messages and parameters defined in the 3GPP standards.

**STEP 310:** The SIP Parser PAR generates the parameters needed for creating a dynamic dedicated radio bearer between itself and the calling user equipment UE1. It uses information from the session description protocol answer field of the SIP message 200 OK received from the called user equipment UE2, and from operation and administration management information, supplied by the network and that is relevant for creating a dynamic dedicated radio bearer between itself and the calling user equipment UE1.

**STEP 311:** The SIP Parser PAR forwards the SIP 200 OK message to the calling user equipment UE1.

**STEP 312:** The home evolved node B (HeNB) triggers the dynamic radio bearer procedure for a new voice flow, by using the messages and parameters defined in the 3GPP standards, between itself and the calling user equipment UE1.

**STEP 313:** The calling user equipment UE1 sends, to the SIP parser PAR, a SIP message ACK acknowledging the reception of the SIP message 200 OK.

**STEP 314:** The SIP Parser PAR forwards the SIP message ACK to the called user equipment UE2.

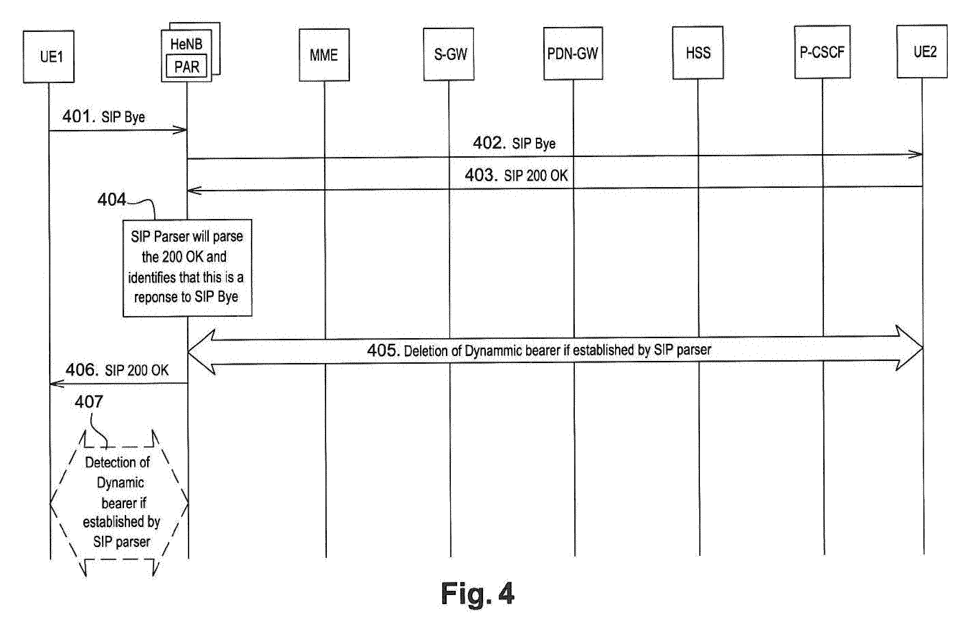

**Figure 4** shows a signaling flow for a VoLTE call release procedure for the case where two users UE1 and UE2 are connected to a same home evolved node B, HeNB.

**STEP 401:** The user equipment UE1 triggers the call release procedure by hanging up the call and sending a SIP message Bye to the home evolved node B, HeNB. This message is destined to the called user equipment UE2. This procedure is similar when the user equipment UE2 terminates the call.

**STEP 402:** The SIP Parser PAR forwards the SIP message Bye to the user equipment UE2.

**STEP 403:** The user equipment UE2 answers to the SIP parser PAR by sending a SIP message SIP 200 OK to the SIP parser PAR.

**STEP 404:** The SIP parser PAR parses the received SIP message 200 OK. It checks whether there is a SDP answer field present in this SIP message 200 OK; and it checks the 'CSeq header' in this SIP message 200 OK, in order to determine whether the message 200 OK is the response to the SIP message Bye sent by user equipment UE1, at STEP 401.

**STEP 405:** In this example, the message 200 OK is the response to the SIP message Bye sent by user equipment UE1 towards the user equipment UE2, so the SIP parser PAR initiates the deletion of the established dynamic bearer between itself and the user equipment UE2. The SIP parser PAR triggers the deletion only if it has triggered the establishment.

**STEP 406:** The SIP parser PAR forwards the SIP message 200 OK to the user equipment UE1.

**STEP 407:** The SIP parser PAR initiates the deletion of the established dynamic bearer between itself and the user equipment UE1. The SIP parser PAR triggers the deletion only if it has triggered the establishment.

The scope of the invention is not limited to the case where both user equipments UE1 and UE2 are connected to a same evolved node B, corresponding to a single small cell. They may be connected to two distincts evolved nodes B, corresponding to two differents cells in a same "group of small cells" as defined by the 3GPP standards. In particular, this group of small cells may belong to an entreprise. Every SIP registration is synchronized within the small cell group. During a call, the Real Time Transport Protocol packets are tunneled between two access points through local routing, if the user equipments UE1 and UE2 are respectively connected to two different HeNBs belonging to same group.

The scope of the invention is not limited to the case where the calling user equipment UE1 remains connected to a given HeNB, and the called user equipment UE2 remains connected to another given HeNB. The method according to the invention is compatible with the mobility of both user equipments UE1 and UE2 inside a same group of small cells: Each HeNB creates and maintains a mapping between a registered SIP universal resource identifier and an IP address for each user equipment that has been registered on this HeNB. A tunnel end point is synchronized during each user equipment SIP registration (broadcast/multicast mechanism). When calling user equipment UE1 tries to establish a VoLTE call, the HeNB to which it is connected refers the mapping information of the called user equipment UE2, and identifies the tunnel end point of the called user equipment UE2 and performs local routing.

A HeNB comprising a parser according to the invention is capable of supporting local routing and so will create mapping information as follows, for a given user equipment:
- During parsing at SIP registration/de-registration of a given user equipment (Figures 1 and 2), it creates/deletes mapping between a SIP universal resource identifier and an assigned IP address, for this user equipment. This mapping will be used for parsing and rerouting of SIP Invite messages for call setup locally.
- During parsing at SIP Invite scenario (Figure 3) the mapping is updated with the SDP information, which contains the port number on which real time transport protocol packets are sent/received by the SIP client of the given user equipment.
- Port network address translation is applied for VoLTE real time transport protocol packets.
- Each packet is then locally routed depending on its port and destination IP address.

The above mentioned mapping information is needed for local routing within a group of small cells: During a handover, this mapping information is passed from a source HeNB to a destination HeNB. Apart from this mapping information, the routing information of neighbor home evolved nodes, and corresponding information mentioned in the above steps are also transferred.

This enables the HeNB to which the calling user equipment is connected to check whether the called user equipment is connected to another HeNB present in the same group of small cells, or not. If this other HeNB is in the same group of small cells, then the HeNB of the calling user equipment triggers local routing.

The method according to the invention enables cheaper communication for enterprise users, their phones can be used to make calls to their colleagues inside office premises for free. This significantly reduces the cost of calls inside an enterprise.

For home users it is easier to have a call with family members through the phone like with an intercom solution.

So the method according to the invention provides a significant value for enterprise and home customers that opt for small cell solutions.

## Claims

1. Parser (PAR) for locally routing voice over at least one small cell of a long term evolution network, **characterized in that** it comprises means for, when a user equipment (UE1) triggers a Session Initiation Protocol (SIP) registration procedure:
- receiving (110) a SIP message 200 OK from a proxy call session control function (P-CSCF),
- checking (111) whether the received SIP message 200 OK is a response to a SIP message Register, and if the checking is positive,
- checking (111) whether the Expire field in the Contact header in the SIP message 200 OK is non zero, and if the checking is positive,
- creating (111) mapping information mapping a registered SIP universal resource identifier assigned to the user of the user equipment UE and an IP address assigned to the user equipment UE,
- and synchronizing a tunnel end point during each user equipment SIP registration.

2. Parser according to claim 1, further comprising means for, when a calling user (UE1) establishes a call with a called user (UE2):
- receiving (301) a SIP INVITE message sent by the calling user equipment (UE1) for establishing a call with the called user equipment (UE2),
- parsing (302) this message and checking whether the called user equipment (UE2) is locally connected to the same home evolved node B (HeNB) or to a same group of home evolved nodes B as the calling user equipment (UE1), and whether the called user equipment (UE2) is authorized for local connectivity;
- and, if these two conditions are met:
-- receiving (307) a SIP 200 OK message from the called user equipment (UE2),
-- parsing (308) the received SIP 200 OK message for generating relevant parameters needed for the creation of a first dynamic radio bearer for voice media between the calling user equipment (UE1) and the called user equipment (UE2), by using information from a session description protocol answer field of the received SIP message 200 OK and using operation and administration management information supplied by the network and that is relevant for the called user equipment (UE2),
-- triggering (309) the creation of a first dynamic radio bearer for voice media between the calling user equipment (UE1) and the called user equipment (UE2),
-- parsing (310) the received SIP 200 OK message for generating relevant parameters needed for the creation of a second dynamic radio bearer for voice media between the calling user equipment (UE1) and said home evolved node B (HeNB), or said group of home evolved nodes B, by using information from the session description protocol answer field of the received SIP message 200 OK, and using operation and administration management information supplied by the network, and that is relevant for creating a dynamic dedicated radio bearer between the parser (PAR) and the calling user equipment (UE1),
-- triggering (309) the creation of the second dynamic radio bearer for voice media between the calling user equipment (UE1) and said home evolved node B (HeNB1) or said group of home evolved nodes B.

3. Parser according to claim 2, further comprising means for, when the calling user (UE1) releases the call:
- receiving (404) and parsing a SIP message 200 OK from the called user (UE2), for checking whether this message is the response of called user (UE2) to the call release triggered by the first user equipment (UE1);
- and if the checking is positive,
-- triggering (405) the deletion of the second dynamic bearer if this latter has been created by this parser,
-- and triggering (407) the deletion of the second dynamic bearer if this latter has been created by this parser.

4. Parser according to claim 1, further comprising means for, when a user equipment (UE) de-registers or re-registers:
- parsing (204) a received SIP message 200 OK,
- checking whether the "CONTACT" header in the received SIP message 200 OK contains an EXPIRE field, and:
-- if this field is non zero, just forwarding the message to the user equipment (UE),
-- If this field is set to zero, cross verifying whether there is any dynamic bearer established by the SIP parser (PAR), and if there is one, triggering the deletion of this bearer.
- deleting (205) the mapping information created for the user equipment (UE) during SIP registration (111).
